(19) Europäisches Patentamt / European Patent Office / Office européen des brevets

(11) **EP 4 420 047 B1**

(12) **FASCICULE DE BREVET EUROPEEN**

(45) Date de publication et mention
de la délivrance du brevet:
**29.04.2026   Bulletin 2026/18**

(21) Numéro de dépôt: **22797431.8**

(22) Date de dépôt: **03.10.2022**

(51) Classification Internationale des Brevets (IPC):
**G06N 10/20** *(2022.01)*      **G06N 10/40** *(2022.01)*
**G06N 10/70** *(2022.01)*

(52) Classification Coopérative des Brevets (CPC):
**G06N 10/70; G06N 10/20; G06N 10/40**

(86) Numéro de dépôt international:
**PCT/FR2022/051870**

(87) Numéro de publication internationale:
**WO 2023/067260 (27.04.2023 Gazette 2023/17)**

(54) **DISPOSITIF DE CONFINEMENT POUR QUBIT DE CHAT, PORTE Z ET PORTE CNOT UTILISANT CE DISPOSITIF**

CAT-QUBIT-EINDÄMMUNGSVORRICHTUNG, Z-GATE UND CNOT-GATE MIT DIESER VORRICHTUNG

CAT QUBIT CONTAINMENT DEVICE, Z GATE AND CNOT GATE USING THIS DEVICE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **21.10.2021   FR 2111223**

(43) Date de publication de la demande:
**28.08.2024   Bulletin 2024/35**

(73) Titulaire: **Institut National de Recherche en Informatique et
en Automatique
78150 Le Chesnay (FR)**

(72) Inventeurs:
• **GAUTIER, Ronan**
  **78150 Le Chesnay (FR)**
• **SARLETTE, Alain**
  **78150 Le Chesnay (FR)**
• **MIRRAHIMI, Mazyar**
  **78150 Le Chesnay (FR)**

(74) Mandataire: **Vidon Brevets & Stratégie
16B, rue de Jouanet
BP 90333
35703 Rennes Cedex 7 (FR)**

(56) Documents cités:
• ANANDA ROY ET AL: "Continuous Generation and Stabilization of Mesoscopic Field Superposition States in a Quantum Circuit", ARXIV.ORG, CORNELL UNIVERSITY LIBRARY, 201 OLIN LIBRARY CORNELL UNIVERSITY ITHACA, NY 14853, 4 November 2014 (2014-11-04), XP081402440, DOI: 10.1103/ PHYSREVA.91.013810
• J\'ER\'EMIE GUILLAUD ET AL: "Repetition Cat Qubits for Fault-Tolerant Quantum Computation", ARXIV.ORG, CORNELL UNIVERSITY LIBRARY, 201 OLIN LIBRARY CORNELL UNIVERSITY ITHACA, NY 14853, 20 April 2019 (2019-04-20), XP081557716, DOI: 10.1103/PHYSREVX.9.041053
• ANDREW S DARMAWAN ET AL: "Practical quantum error correction with the XZZX code and Kerr-cat qubits", ARXIV.ORG, CORNELL UNIVERSITY LIBRARY, 201 OLIN LIBRARY CORNELL UNIVERSITY ITHACA, NY 14853, 18 October 2021 (2021-10-18), XP091064867, DOI: 10.1103/PRXQUANTUM.2.030345
• QIAN XU ET AL: "Engineering fast bias-preserving gates on stabilized cat qubits", ARXIV.ORG, CORNELL UNIVERSITY LIBRARY, 201 OLIN LIBRARY CORNELL UNIVERSITY ITHACA, NY 14853, 28 May 2021 (2021-05-28), XP081971230

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 420 047 B1

**Description**

La réalisation d'un ordinateur quantique est à ce jour empêchée par le bruit modifiant l'état des bits quantiques (ci-après qubits), causant des erreurs logiques. Malgré de grands progrès réalisés depuis 20 ans pour limiter les sources de bruit, le calcul quantique universel et tolérant aux fautes est actuellement hors de portée. La correction d'erreur quantique vise à résoudre ce problème.

Afin d'assurer la tolérance aux fautes, il faudra corriger deux types d'erreurs : les erreurs de renversement de bit ('bit flip' en anglais) et les erreurs de renversement de phase ('phase flip' en anglais). La principale méthodologie utilisée vise à encoder les qubits sur lesquels une séquence de calcul est spécifiée, dits « qubits logiques », dans un espace informationnel beaucoup plus vaste, composé de qubits dits « physiques ». Dans cet espace informationnel, les qubits logiques sont encodés dans des états dits « codants », qui sont choisis de sorte que le bruit ne permette pas d'induire une transition directe d'un état codant vers un autre.

Le bruit, qui induit ainsi des transitions d'un état codant vers un état non-codant, peut être détecté et corrigé pour ramener le système vers l'état codant initial de manière non ambigüe, c'est-à-dire que chaque état non-codant est associé à un unique état codant. Pour ne pas perturber l'information quantique, cette détection et correction d'erreur doit se faire sans mesure des qubits logiques. Les portes logiques, opérant des transitions d'un état codant vers un autre, peuvent être implémentées sur ce système de manière tolérante aux fautes, par le biais de séquences de contrôle particulières.

La méthode de correction d'erreur quantique la plus répandue s'appelle « code de surface » ('Surface code' en anglais). Ce type de solution est mis en œuvre par les plus grands noms du domaine quantique, comme Google, IBM, l'Université de Delft, l'Université de Zurich, etc., et constitue la solution la plus étudiée dans le monde à ce jour.

Dans un code de surface, l'information quantique est portée par un réseau 2D de qubits physiques. Des schémas ont été proposé pour y effectuer des portes (opérations quantiques) à un et deux qubits logiques tolérantes aux fautes. Cependant, aucune démonstration d'une telle porte n'a encore pu être faite à ce jour. En effet, le plus grand inconvénient du code de surface est qu'il nécessite un grand nombre de qubits physiques de très bonne qualité pour permettre de réaliser le moindre calcul. Au-delà des coûts induits par cette architecture, cela génère des problèmes liés à la nécessité de contrôler un grand nombre de systèmes quantiques.

Les travaux de la Demanderesse l'ont amené à considérer qu'une réduction significative du surcoût matériel est possible pour la correction d'erreur. Pour cette raison, la Demanderesse a étudié les codes bosoniques.

Les codes bosoniques sont une famille de codes correcteurs d'erreurs quantiques qui reposent sur le stockage des qubits physiques dans des modes bosoniques. Trois exemples typiques de ces codes sont les suivants : les codes de chat ('cat-codes' ou 'cat-qubits' en anglais), les codes binomiaux, et les codes GKP (pour Gottesman-Kitaev-Preskill).

Un exemple des codes de chat sont les codes de chat à deux composants mis en œuvre par l'Université de Yale, l'équipe Quantic d'Inria-Mines-ENS-CNRS-Sorbonne Université, ou encore des sociétés comme Quantum Circuits, Inc., Alice & Bob, ou Amazon Web Services.

Dans ces codes, les états codants ("chats") sont des superpositions d'états cohérents d'un oscillateur harmonique quantique (par exemple d'un mode du champ électromagnétique). Ces codes de chats permettent de pratiquement supprimer un des deux types d'erreur logique. Le deuxième type d'erreur peut se gérer en concaténant ce code dans un code de répétition, connu pour la correction d'erreur non-quantique. Les qubits utilisant ces codes de chats sont également appelés qubits de chat.

Plus précisément, un avantage de ces codes est que la probabilité de l'un des deux types d'erreurs peut être rendue arbitrairement faible en variant simplement la taille du chat.

Ainsi, l'article de Lescanne et al. « Exponential suppression of bit-flips in a qubit encoded in an oscillator », Nature Physics, 16, 509, 2020 a démontré que les erreurs de renversement de bits sont supprimées dans un rapport exponentiel avec le nombre moyen de photons dans l'état du qubit de chat.

Dans le contexte de la correction d'erreurs quantique, un qubit avec un tel biais d'erreur exponentiel permet de réduire considérablement la surcharge requise pour atteindre la tolérance aux fautes, c'est-à-dire le nombre de qubits physiques qu'il faut utiliser ensemble pour réaliser un qubit logique stable. De manière concurrente au besoin de stabilité, il est essentiel de pouvoir exécuter un certain nombre de portes physiques, en particulier la porte CNOT en préservant le biais d'erreur. Dit autrement, la suppression exponentielle des erreurs de bits doit rester intacte pendant l'opération de la porte.

À l'heure actuelle, deux approches sont envisagées et mises en œuvre expérimentalement afin de confiner la dynamique d'un oscillateur harmonique (un espace de dimension infinie) à la variété d'états d'un qubit de chat (un espace de dimension 2) : une approche Hamiltonienne appelée qubit de chat « Kerr » et une approche par dissipation d'énergie appelée qubit de chat « dissipatif ».

Le qubit de chat Kerr est protégé contre les faibles perturbations Hamiltoniennes et permet de mettre en œuvre des portes quantiques rapides et de haute fidélité.

Plus précisément, les qubits de chat Kerr s'appuient sur un confinement du qubit par un entraînement à deux photons (« two-photon drive » en anglais) combiné à une non-linéarité de type Kerr, comme décrit dans l'article de Puri et al., « Engineering the quantum states of light in a Kerr-nonlinear resonator by two-photon driving » npj Quantum Inf 3, 18 (2017) ou dans l'article de Darmawan et al, « Practical quantum error correction with the XZZX code and Kerr-cat qubits » PRX Quantum 2, 030345 (2021).

Dans le référentiel tournant du mode de qubit de chat, ce schéma peut être modélisé par l'Hamiltonien $H = -K(a^2-\alpha^2)^\dagger(a^2-\alpha^2)$, où $K$ représente l'intensité de l'effet de Kerr, $K\alpha^2$ est l'amplitude de l'entraînement à deux photons, $a$ représente l'opérateur d'annihilation de photons de l'oscillateur harmonique, et l'indice $\dagger$ transforme un opérateur d'annihilation de photon en opérateur de création de photon. La variété des états de qubit de chat correspond à un espace propre dégénéré de l'Hamiltonien ci-dessus, séparé du reste du spectre par un écart proportionnel à l'intensité de la non-linéarité Kerr. Ce schéma de confinement a été récemment démontré dans une expérience de l'équipe de l'Université de Yale (voir l'article de Grimm et al., « Stabilization and operation of a Kerr-cat qubit », Nature, 584, 205, 2020).

Pour les qubits de chat Kerr, la mise en œuvre des portes quantiques de rotation Z sur un seul qubit, de CNOT sur 2 qubits et de CCNOT sur 3 qubits ont été proposées dans l'article de S. Puri et. Al. « Bias-preserving gates with stabilized cat qubits », Science Advances 6, 34, 10.1126, 2020).

Cependant, les qubits de chat Kerr sont peu performants contre les perturbations causées par le bruit à large bande comme l'excitation thermique ou le déphasage des photons qui se produisent naturellement dans les résonateurs quantiques, même en l'absence de portes.

En effet, en l'absence d'une stabilisation dissipative du qubit de chat, les perturbations autres que les Hamiltoniens faibles à variations lentes ne sont contrées par aucun mécanisme et peuvent entraîner des erreurs de renversement de bits importantes. Les canaux d'erreur typiques tels que l'excitation thermique viennent ainsi supprimer le biais d'erreur exponentiel, et bloquent donc la voie vers une tolérance aux fautes efficace en matériel (« hardware efficient » en anglais).

Récemment, l'article de Putterman et al. « Colored Kerr cat qubits », arXiv :2107.09198 [quant-ph] a proposé une approche pour remédier à ce problème et assurer la suppression des erreurs de renversement de bits. Cette approche consiste en l'ajout d'une relaxation colorée induisant une attraction vers la variété des états du qubit de chat. Grâce à cet ajout, la suppression des erreurs de bits est rétablie pour le qubit de chat Kerr. Cependant, afin d'atteindre le même niveau de performance que dans le cas d'un qubit de chat dissipatif, une ingénierie minutieuse de l'environnement au-delà des filtres Purcell qui sont couramment utilisés dans les dispositifs supraconducteurs est nécessaire. Cette tâche est extrêmement ardue à réaliser d'un point de vue expérimental, et offre des prospects de protection contre les renversements de bits limités.

De l'autre côté, le qubit de chat dissipatif est conçu pour contrer tous ces mécanismes de décohérence, mais les performances des portes quantiques sont limitées par les processus dissipatifs non adiabatiques qui entraînent une perte d'information pendant l'opération. Cette approche est basée sur une dissipation à deux photons qui confine la dynamique aux deux seuls états stables du système, comme décrit dans l'article de Mirrahimi et al., « Dynamically protected cat-qubits : a new paradigm for universal quantum computation » 2014 New J. Phys. 16045014) ou dans l'article de Roy et al « Continuous Generation and Stabilization of Mesoscopic Field Superposition States in a Quantum Circuit » Phys. Rev. A 91, 013810 (2015).

Comme mentionné plus haut, une expérience récente a démontré la suppression exponentielle des erreurs de bits avec ce schéma de confinement dissipatif de qubit de chat. Dans cette expérience, le confinement est obtenu grâce à un élément de circuit supraconducteur appelé ATS (pour « Assymetrically Threaded SQUID »). Le qubit de chat, encodé dans un oscillateur harmonique, est couplé à un oscillateur tampon à l'aide d'un ATS. L'oscillateur tampon est hautement dissipatif et son amortissement énergétique est beaucoup plus rapide que celui du mode hébergeant le qubit de chat. L'oscillateur tampon est dit « à bas Q » (où Q signifie facteur de qualité) en raison de sa courte durée de vie, tandis que l'oscillateur hébergeant le qubit de chat est dit « à haut Q».

Plus précisément, dans cette approche dissipative, on commence par mettre en œuvre un Hamiltonien qui réalise l'échange de deux photons de l'oscillateur hébergeant le qubit de chat avec un photon de l'oscillateur tampon à bas Q. Dans le référentiel tournant des deux oscillateurs : $H_{2ph} = g_2(a^2b^\dagger+a^2{}^\dagger b)$, où $a$ représente l'opérateur d'annihilation de photon de l'oscillateur de qubit de chat, et $b$ représente l'opérateur d'annihilation de photon de l'oscillateur tampon, et l'indice $\dagger$ transforme un opérateur d'annihilation de photon en opérateur de création de photon. Par conséquent, cet Hamiltonien peut être compris comme un échange de deux photons de l'oscillateur $a$ avec un seul photon de l'oscillateur $b$.

De plus, le taux de cet échange peut être calibré par l'amplitude d'une pompe micro-ondes appliquée au dispositif ATS. Il faut ensuite entraîner l'oscillateur tampon de manière résonante. Dans le référentiel tournant de l'oscillateur tampon, ceci peut être modélisé par l'Hamiltonien $H_d=eb^\dagger{}_++e^*b$, ce qui, en choisissant $e = g_2\alpha^2$ l'amplitude complexe de l'entraînement résonnant, donne l'Hamiltonien résultant $H = g_2((a^2-\alpha^2)b^\dagger+(a^2-\alpha^2)^\dagger b)$. Or, du fait de son facteur de qualité bas, l'oscillateur $b$ présente un fort amortissement. Cet amortissement à un photon donc de la forme $\kappa_1 D(b)$ de l'oscillateur $b$ se traduit de manière effective par une dissipation de la forme $\kappa_2 D(a^2-\alpha^2)$ sur l'oscillateur $a$, qui est appelée dissipation à deux photons et qui permet de confiner les états de qubits de chat avec une amplitude $\alpha$.

L'article de J. Guillaud et. al. « Repetition Cat Qubits for Fault-Tolerant Quantum Computation » (Physical Review X 9, 041053, 2019) propose des architectures pour réaliser des rotations Z à un qubit, et des portes CNOT à deux qubits (également appelées CX) et CCNOT à trois qubits (également appelées CCX ou Toffoli) à partir de qubits de chat dissipatifs.

Dans le cas de la porte CNOT, qui est une porte essentielle pour la correction d'erreur, cette implémentation dissipative est basée sur la modification du terme de dissipation pour le qubit de chat cible afin de le rendre dépendant de l'état du qubit de chat de contrôle. Par qubit de chat de contrôle, on entend le qubit dont l'état va influer sur le qubit de chat cible.

Par abus de langage, il est considéré que ce terme de dissipation « attire » l'état du système vers le chemin idéal qu'il devrait suivre. Pour améliorer les performances de la porte, il convient d'éviter le décalage par rapport au chemin idéal qui apparait nécessairement lorsqu'on a uniquement un mécanisme qui « attire », il faut également concevoir un Hamiltonien d'anticipation (« feedforward Hamiltonian » en anglais) qui « pousse » simultanément l'état du système le long de ce même chemin. Expérimentalement parlant, les termes de dissipation peuvent être implémentés par l'ATS et en utilisant un couplage à l'oscillateur tampon à bas Q, tandis que le terme d'anticipation peut être implémenté par un couplage non linéaire piloté entre les deux oscillateurs de qubits de chat contrôle et cible. L'impossibilité d'implémenter un terme d'anticipation exact entraîne nécessairement une dissipation, qui s'accompagne d'erreurs de renversement de phase. Plus la porte est rapide - donc plus l'on « tire » avec la dissipation -, plus l'erreur de phase augmente.

Le principal inconvénient de cette approche est la performance limitée des portes logiques en termes d'erreurs de renversement de phase. Comme détaillé dans l'article de J. Guillaud et al. cité plus haut, diverses portes préservant le biais d'erreur, telles que les rotations d'un seul qubit autour de l''axe Z, les portes CNOT à deux qubits et CCNOT à trois qubits, reposent explicitement sur le mécanisme dissipatif puisque leur implémentation Hamiltonienne idéale est expérimentalement irréaliste actuellement. Cette correction dissipative des portes s'accompagne d'erreurs de renversement de phase, qui augmentent avec la vitesse des portes.

L'invention vient améliorer la situation. À cet effet, elle propose un dispositif de confinement pour qubit de chat comprenant un échangeur à deux photons, un oscillateur tampon à bas facteur de qualité et un oscillateur tampon anharmonique à haut facteur de qualité, dans lequel l'oscillateur tampon à bas facteur de qualité et l'oscillateur tampon anharmonique à haut facteur de qualité sont reliés à l'échangeur à deux photons de telle sorte que, lorsqu'ils sont tous deux entraînés à leur fréquence de résonance respective et que l'échangeur à deux photons est relié à un oscillateur de qubit de chat, un échange de deux photons de l'oscillateur de qubit de chat avec un photon de l'oscillateur tampon à bas facteur de qualité et un échange de deux photons de l'oscillateur de qubit de chat avec un photon de l'oscillateur tampon anharmonique à haut facteur de qualité ont respectivement lieu, et le dispositif de confinement met en œuvre un Hamiltonien de formule $g_{2h}((a^2-\alpha^2)bh^\dagger+(a^2-\alpha^2)^\dagger bh)+g_{2l}((a^2-\alpha^2)^\dagger bl+(a^2-\alpha^2)bl^\dagger)$ où $g_{2h}$ et $g_{2l}$ sont des forces d'Hamiltonien, a est l'opérateur d'annihilation de photon de l'oscillateur de qubit de chat, $\alpha$ est l'amplitude de l'état de chat, bh est l'opérateur d'annihilation de photon de l'oscillateur tampon anharmonique à haut facteur de qualité, bl est l'opérateur d'annihilation de photon de l'oscillateur tampon à bas facteur de qualité.

Ce dispositif est particulièrement avantageux car il permet de mettre en œuvre un dispositif de confinement qui bénéficie à la fois des avantages de l'approche dissipative et de l'approche Hamiltonienne, ce qui permet de maintenir un biais d'erreur pour une classe très large de perturbations physiques, tout en rendant possible la réalisation de portes dont la vitesse et la fidélité sont satisfaisantes.

L'invention est telle que défini dans les revendications. Selon divers modes de réalisation, une ou plusieurs des caractéristiques suivantes peuvent être présentes :

- le dispositif comprend deux échangeurs à deux photons, l'un étant disposé entre l'oscillateur tampon à bas facteur de qualité et l'oscillateur de qubit de chat, et l'autre étant disposé entre l'oscillateur tampon anharmonique à haut facteur de qualité et l'oscillateur de qubit de chat,

- l'échangeur à deux photons et l'oscillateur tampon anharmonique à haut facteur de qualité sont réalisés par un circuit ATS avec des énergies Josephson de jonctions asymétriques, qui est entraîné de manière résonante à la fréquence $\omega_h$ et qui se voit appliquer deux pompes à flux de radiofréquence de fréquences respectives $2\omega_a-\omega_h$ et $2\omega_a-\omega_l$, $\omega_a$ étant la fréquence de résonance du mode de l'oscillateur de qubit de chat, $\omega_l$ est la fréquence de résonance de l'oscillateur tampon à bas facteur de qualité, et $\omega_h$ est la fréquence de résonance de l'oscillateur tampon anharmonique à haut facteur de qualité, le circuit ATS étant couplé à l'oscillateur tampon à bas facteur de qualité, entrainé de manière résonante à la fréquence $\omega_1$, l'oscillateur tampon à bas facteur de qualité étant couplé à un bain dissipatif,

- l'échangeur à deux photons et l'oscillateur tampon à bas facteur de qualité sont réalisés par un circuit ATS avec des énergies Josephson de jonctions symétriques, qui est entraîné de manière résonante à la fréquence $\omega_l$ et qui se voit appliquer deux pompes à flux de radiofréquence de fréquences respectives $2\omega_a-\omega_h$ et $2\omega_a-\omega_l$, $\omega_a$ étant la fréquence de résonance du mode de l'oscillateur de qubit de chat, $\omega_l$ est la fréquence de résonance de l'oscillateur tampon à bas facteur de qualité, et $\omega_h$ est la fréquence de résonance de l'oscillateur tampon anharmonique à haut facteur de qualité, le circuit ATS étant couplé à un oscillateur tampon anharmonique à haut facteur de qualité, entrainé de manière résonante à la fréquence $\omega_h$, et à un bain dissipatif, et

- l'oscillateur tampon anharmonique à haut facteur de qualité est un transmon.

L'invention concerne également une porte Z pour qubit de chat, comprenant un dispositif de confinement selon l'invention dont l'échangeur à deux photons est relié à un oscillateur de qubit de chat, dans laquelle ladite porte est exécutée en entraînant l'oscillateur de qubit de chat pendant une durée choisie avec un Hamiltonien de type Zeno dont l'amplitude $\varepsilon_Z(t)$ vérifie l'équation $4 \int_0^T Re(\alpha \varepsilon_Z(t)) dt = \vartheta$ où $\alpha$ est la taille du qubit de chat, Re() désigne la partie réelle, et T est la durée de la porte, et $\vartheta$ est l'angle de rotation autour de l'axe Z.

L'invention concerne également une porte CNOT pour qubits de chat, comprenant un qubit de chat de contrôle comprenant un dispositif de confinement selon l'une des revendications 1 à 5 dont l'échangeur à deux photons est relié à un oscillateur de qubit de chat et un qubit de chat cible comprenant un dispositif de confinement selon l'une des revendications 1 à 5 dont l'échangeur à deux photons est relié à un oscillateur de qubit de chat, et un coupleur non linéaire reliant l'oscillateur de qubit de chat du qubit de chat de contrôle et l'oscillateur de qubit de chat du qubit de chat de contrôle, dans laquelle la porte est exécutée en désactivant le dispositif de confinement du qubit de chat cible.

Dans cette porte CNOT le circuit non linéaire peut être une jonction Josephson qui met en œuvre un Hamiltonien de type Zeno de forme $\varepsilon_{CX}(\hat{a}_{co} + \hat{a}_{co}^\dagger - 2\alpha)(\hat{a}_{ci}^\dagger \hat{a}_{ci} - \alpha^2)$ où $\varepsilon_{CX}$ est l'amplitude d'Hamiltonien, $\hat{a}_{co}$ et $\hat{a}_{co}^\dagger$ sont les opérateurs d'annihilation et de création de photons pour l'oscillateur harmonique de qubit de contrôle, $\hat{a}_{ci}$ et $\hat{a}_{ci}^\dagger$ sont les opérateurs d'annihilation et de création de photons pour l'oscillateur harmonique de qubit cible, et $\alpha$ est la taille de l'état de chat, l'amplitude $\varepsilon_{CX}(t)$ vérifiant l'équation $4 \int_0^T Re(\alpha \varepsilon_{CX}(t)) dt = \pi$ où $\alpha$ est la taille du qubit de chat, Re() désigne la partie réelle, et T est la durée d'exécution de la porte.

Dans cette porte CNOT, l'Hamiltonien $g_{2l}((a^2-\alpha^2)^\dagger bl+(a^2-\alpha^2)bl^\dagger)$ du dispositif de confinement du qubit de contrôle est toujours mis en œuvre, l'Hamiltonien $g_{2h}((a^2-\alpha^2)bh^\dagger+(a^2-\alpha^2)^\dagger bh)$ du dispositif de confinement du qubit de chat de contrôle est mis en œuvre au moins pendant l'exécution de la porte, l'Hamiltonien $g_{2l}((a^2-\alpha^2)^\dagger bl+(a^2-\alpha^2)bl^\dagger)$ du dispositif de confinement du qubit de chat cible n'est pas mis en œuvre pendant l'exécution de la porte CNOT et est mis en œuvre le reste du temps, et l'Hamiltonien $g_{2h}((a^2-\alpha^2)bh^\dagger+(a^2-\alpha^2)^\dagger bh)$ du dispositif de confinement du qubit de chat cible n'est pas mis en œuvre pendant l'exécution de la porte.

D'autres caractéristiques et avantages de l'invention apparaîtront mieux à la lecture de la description qui suit, tirée d'exemples donnés à titre illustratif et non limitatif, tirés des dessins sur lesquels :

- la [Fig.1] représente un schéma générique de réalisation d'un dispositif de confinement de qubit de chat selon un premier mode de réalisation de l'invention,

- la [Fig.2] représente un schéma générique d'un dispositif de confinement de qubit de chat selon un deuxième mode de réalisation de l'invention,

- la [Fig.3] représente un premier exemple de mise en œuvre du dispositif de confinement de la figure 1,

- la [Fig.4] représente un deuxième exemple de mise en œuvre du dispositif de confinement de la figure 1,

- la [Fig.5] représente un schéma générique d'une porte CNOT entre deux qubits chats mettant en œuvre le dispositif de confinement de la figure 1,

- la [Fig.6] représente un exemple de mise en œuvre de la porte de la figure 5 avec dispositif de confinement des qubits de chat de la figure 3, et

- la [Fig.7] représente les amplitudes des Hamiltoniens de la porte de la figure 6.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

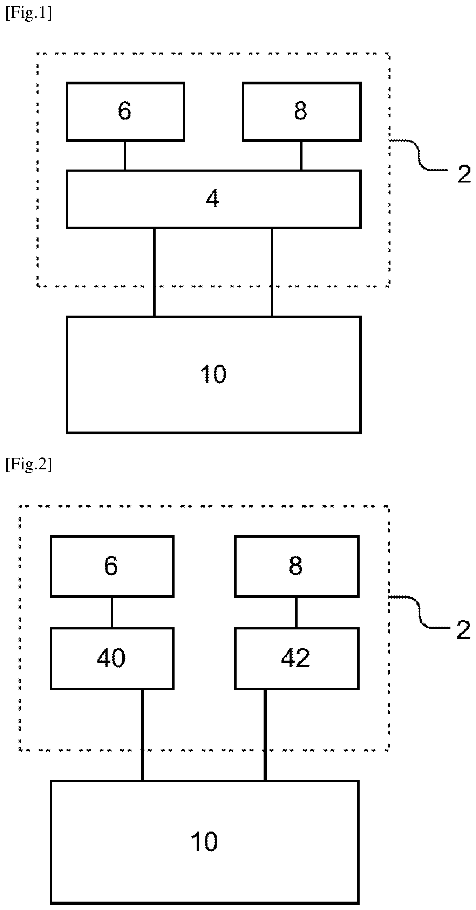

La figure 1 représente un schéma générique d'un dispositif de confinement de qubit de chat selon un premier mode de réalisation de l'invention, ainsi que les modes d'oscillation au sein de celui-ci. Comme cela apparaîtra plus bas, le dispositif de confinement 2 présente un confinement qui peut être qualifié de « dissipatif-conservatif ».

Le dispositif de confinement de qubit de chat 2 comprend un échangeur non-linéaire de quanta d'excitation, appelé plus concrètement échangeur à deux photons 4, un oscillateur tampon à bas facteur de qualité 6 et un oscillateur tampon anharmonique à haut facteur de qualité 8.

Dans l'exemple décrit ici, l'échangeur à deux photons 4 est agencé pour présenter deux liaisons à un oscillateur hébergeant le qubit de chat 10 stabilisé par le dispositif de confinement. Ces deux liaisons représentent une sorte d'interface externe du dispositif de confinement 2. Un oscillateur tampon à bas facteur de qualité 6 et un oscillateur tampon anharmonique à haut facteur de qualité 8 sont également reliés à l'échangeur à deux photons 4, mais cette fois à l'intérieur du dispositif de confinement 2.

Comme cela est illustré avec la figure 2, cet agencement peut être vu comme deux liaisons parallèles :

- d'une part entre l'oscillateur tampon à bas facteur de qualité 6 et l'oscillateur hébergeant le qubit de chat 10, un échangeur à deux photons 40 étant disposé entre eux, et

- d'autre part entre l'oscillateur tampon anharmonique à haut facteur de qualité 8 et l'oscillateur hébergeant le qubit de chat 10, un échangeur à deux photons 42 étant disposé entre eux.

Plus précisément, grâce à un processus cohérent de mélange à quatre ondes et à l'application d'une pompe à micro-ondes à une fréquence appropriée, l'échangeur à deux photons 4 (respectivement 40) peut échanger deux quanta d'excitation de l'oscillateur de qubit de chat 10 avec un quantum d'excitation de l'oscillateur tampon à bas facteur de qualité.

L'oscillateur tampon à bas facteur de qualité étant fortement dissipatif, ce processus de perte à un photon de l'oscillateur tampon conduit de façon effective à une perte à deux photons de l'oscillateur de qubit de chat. Dans un processus inverse, l'oscillateur tampon à bas facteur de qualité étant lui-même entraîné à sa fréquence de résonance, l'addition d'un seul photon à l'oscillateur tampon induit de façon effective l'addition de deux photons à l'oscillateur hébergeant le qubit de chat. Ces deux mécanismes fournissent ensemble le confinement dissipatif, tandis que le taux de stabilisation et l'amplitude du chat peuvent être accordés par la pompe à micro-ondes contrôlant l'échangeur à deux photons et l'entraînement résonant sur l'oscillateur tampon à bas facteur de qualité. Cette interaction fournit un Hamiltonien de dissipation $g_{2l}((a^2-\alpha^2)bl^\dagger+(a^2-\alpha^2)^\dagger bl)$, où la force de l'Hamiltonien $g_{2l}$ et l'amplitude du chat $\alpha$ peuvent être réglées par la pompe à micro-ondes et l'entraînement résonant de l'oscillateur tampon à bas facteur de qualité 6, et où bl est l'opérateur d'annihilation de photon de l'oscillateur tampon à bas facteur de qualité 6 et † est un indice qui transforme un opérateur d'annihilation de photon en opérateur de création de photon.

En même temps, une seconde pompe à une fréquence appropriée appliquée au même échangeur à deux photons (ou à un deuxième échangeur à deux photons dans le mode de réalisation de la figure 2) établit un échange entre deux photons de l'oscillateur de qubit de chat et un unique photon de l'oscillateur tampon anharmonique à haut facteur de qualité. Cette interaction, associée à un entraînement résonant de l'oscillateur tampon à haut facteur de qualité, fournit un Hamiltonien de confinement effectif $g_{2h}((a^2-\alpha^2)bh+(a^2-\alpha^2)^\dagger bh)$, où la force de l'Hamiltonien $g_{2h}$ et l'amplitude du chat $\alpha$ peuvent être réglées par la pompe à micro-ondes et l'entraînement résonant de l'oscillateur tampon à haut facteur de qualité, et où bh est l'opérateur d'annihilation de photon de l'oscillateur tampon à haut facteur de qualité 8 et † est un indice qui transforme un opérateur d'annihilation de photon en opérateur de création de photon.

Les figures 1 et 2 ont été décrites en faisant référence à des échanges de photons car les exemples décrits ici utilisent des qubits à circuit supraconducteurs qui opèrent par échange de photons. Dans d'autres variantes, les qubits pourraient être réalisés mécaniquement, et l'échangeur à deux photons pourrait être un échangeur à deux phonons ou un échangeur à deux photons contre un photon. D'une manière générale, l'échangeur 4 est agencé pour échanger des quantums d'excitation, qui peuvent être des photons ou des phonons.

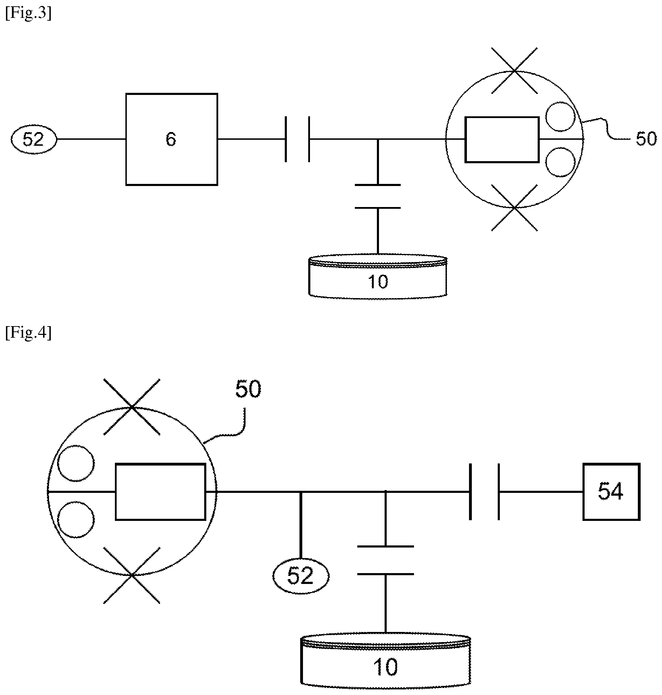

La figure 3 représente un premier exemple de mise en œuvre du mode de réalisation de la figure 1. Dans l'exemple décrit ici, un circuit ATS 50 (pour « Assymetrically Threaded SQUID ») est utilisé pour mettre en œuvre l'échangeur à deux photons 4.

Comme décrit dans l'article de Lescanne et al. cité plus haut, l'ATS comprend un SQUID muni d'une inductance en parallèle. Des flux magnétiques constants différents peuvent être appliqués aux deux boucles de l'ATS. Dans l'article cité, les jonctions de l'ATS sont parfaitement symétriques, tandis que le point de fonctionnement est un flux normalisé (ratio entre le flux magnétique appliqué et le quantum du flux magnétique) de 0 dans une boucle et un flux normalisé de $\pi$ dans l''autre, d'où la dénomination « asymétrique » du dipôle. Ce choix permet de supprimer tous les termes de mélange d'ondes paires et, avec l'application d'une pompe alternative appropriée, de concevoir un Hamiltonien d'échange à deux photons efficace, sans perturbations telles que les termes d'auto-Kerr ou de Kerr croisé.

La Demanderesse a découvert que le contrôle de l'amplitude des termes de mélange d'ondes impaires par rapport aux termes de mélange d'ondes paires, obtenu en changeant les énergies de Josephson des jonctions de l'ATS, rend possible d'ajouter un confinement Hamiltonien compatible avec le confinement dissipatif connu.

Ainsi, dans l'exemple décrit ici, l'ATS 50 est couplé à l'oscillateur de qubit de chat 10 de manière similaire à ce qui est décrit dans l'article de Lescanne et al., mais le mode hébergé par le circuit de l'ATS ne suffit pas à mettre en œuvre l'entièreté du dispositif de confinement. Ainsi, l'ATS 50 est aussi fortement couplé à un oscillateur tampon, que cet exemple propose à bas facteur de qualité 6 et couplé à un bain dissipatif 52, tandis que l'oscillateur tampon à haut facteur de qualité 8 est hébergé par le circuit de l'ATS. En appliquant deux pompes à flux de radiofréquence de fréquences respectives $2\omega_a-\omega_h$ et $2\omega_a-\omega_l$, l'ATS 50 met en œuvre deux Hamiltoniens d'échange à deux photons $g_{2h}(a^2h^\dagger\_a^2\dagger h)$ et $g_{2l}(a^2l^\dagger\_a^2\dagger l)$ avec respectivement un mode haut Q 8 et un mode bas Q 6 aux fréquences de résonance

respectives $\omega_h$ et $\omega_l$ tandis que $\omega_a$ est la fréquence de résonance du mode du qubit de chat.

Lorsque ces modes sont entraînés à leur résonnance, les Hamiltoniens effectifs sont $g_{2h}((a^2-\alpha^2)$ $bh^\dagger+(a^2-\alpha^2)^\dagger bh)$ et $g_{2l}((a^2-\alpha^2)bl^\dagger+(a^2-\alpha^2)^\dagger bl)$. Dans le schéma proposé, l'oscillateur tampon est un oscillateur harmonique à bas facteur de qualité 6, avec bl son opérateur d'annihilation de photon, tandis que l'oscillateur haut Q est anharmonique, avec bh l'opérateur d'annihilation d'une excitation entre ses deux niveaux fondamentaux. En outre, cet oscillateur anharmonique haut-Q peut être un des modes du circuit de l'ATS.

L'Hamiltonien $g_{2h}((a^2-\alpha^2)bh^\dagger+(a^2-\alpha^2)^\dagger bh)$ fournit le confinement conservatif permettant la mise en œuvre de portes rapides, tandis que le Hamiltonien $g_{2l}$ $((a^2-\alpha^2)bl^\dagger+(a^2-\alpha^2)^\dagger bl)$, par sa liaison avec le mode bl de l'oscillateur tampon à bas facteur de qualité présente une forte dissipation, se traduisant par un confinement dissipatif de la forme $\kappa_2 D(a^2-\alpha^2)$, ce qui assure l'élimination exponentielle des erreurs de renversement de bit, en présence d'une classe très large de perturbations physiques.

La figure 4 représente un deuxième exemple de mise en œuvre du mode de réalisation de la figure 1.

Dans cet exemple, l'ATS 50 joue à nouveau le rôle de l'échangeur à deux photons 4, mais au lieu de jouer également le rôle d'oscillateur tampon anharmonique à haut facteur de qualité 8, il joue le rôle d'oscillateur tampon à bas facteur de qualité 6 et est relié à un bain dissipatif 52. L'oscillateur tampon anharmonique à haut facteur de qualité est ici mis en œuvre par un qubit transmon 54 (pour « transmission line shunted plasma oscillation qubit » en anglais), qui est non linéaire et à haut facteur de qualité de par sa conception. En effet, un transmon est conceptuellement similaire à un oscillateur harmonique composé d'une inductance et d'un condensateur en parallèle. Dans le cas du transmon, l'inductance est remplacée par un autre composant électronique inductif, la jonction Josephson, qui est naturellement non linéaire. En modifiant le rapport d'énergie entre la jonction et le condensateur, le régime de paramètres du transmon peut être atteint, ce qui implémente un mode non linéaire à haut facteur de qualité.

Dans le mode de réalisation de la figure 1, l'oscillateur tampon à bas facteur de qualité 6 n'a pas besoin d'être anharmonique. Ainsi, les jonctions de l'ATS 50 devraient être choisies symétriques afin de supprimer les effets d'auto Kerr et de Kerr croisé, seuls les flux appliqués seront asymétriques comme dans l'article de Lescanne et al. cité plus haut.

Dans le cas de la figure 3 comme dans celui de la figure 4, il est possible de réaliser une porte Z en appliquant un Hamiltonien à l'oscillateur de qubit de chat.

Afin d'effectuer une porte Z, un Hamiltonien de type Zeno est allumé. Un Hamiltonien de type Zeno est un Hamiltonien dont la dynamique effective projetée dans l'espace codant - ici l'espace codant est l'espace composé des deux états du qubit de chat - correspond à l'opération voulue, ici une rotation autour de l'axe Z du qubit. Un exemple d'Hamiltonien de type Zeno pour une porte Z sur un qubit de chat est un Hamiltonien d'entraînement à un photon, de la forme $\varepsilon_Z \hat{a} + \varepsilon_Z^* \hat{a}^\dagger$, où $\hat{a}$ et $\hat{a}^\dagger$ sont les opérateurs d'annihilation et création de photon de l'oscillateur harmonique de qubit de chat, et où $\varepsilon_Z$ est l'amplitude de l'entraînement. Cet Hamiltonien peut être réalisé expérimentalement avec un entraînement résonant de l'oscillateur harmonique hébergeant le qubit de chat. Pour effectuer une porte Z d'angle de rotation $\vartheta$, l'amplitude $\varepsilon_Z(t)$ de l'entraînement doit vérifier l'équation $4 \int_0^T Re(\alpha \varepsilon_Z(t))dt = \vartheta$ où $\alpha$ est la taille du qubit de chat, Re() désigne la partie réelle, et T est la durée de la porte Z effectuée.

Dans les exemples décrits ici, la convention utilisée pour les états codants d'un qubit de chat est la suivante. Les états logiques '0' et '1' d'un qubit de chat sont définis par $|0\rangle_L = \frac{1}{\sqrt{2}}(|C_\alpha^+\rangle + |C_\alpha^-\rangle)$ et $|1\rangle_L = \frac{1}{\sqrt{2}}(|C_\alpha^+\rangle - |C_\alpha^-\rangle)$, où les états $C_\alpha^+$ et $C_\alpha^-$ sont les états de superposition définis par $|C_\alpha^\pm\rangle = (|\alpha\rangle \pm |-\alpha\rangle)/\||\alpha\rangle \pm |-\alpha\rangle\|$ où $|\pm\alpha\rangle$ sont des états cohérents d'un oscillateur harmonique quantique de taille $\alpha$, et où $\|\|$ désigne la norme de l'état quantique.

Il existe une autre convention selon laquelle les états logique '0' et '1' sont définis par $|0\rangle_L = |C_\alpha^+\rangle$ et $|1\rangle_L = |C_\alpha^-\rangle$. Dans ce cas, la porte Z décrit dans la présente devient une porte X (rotation du qubit autour de son axe X dans la sphère de Bloch).

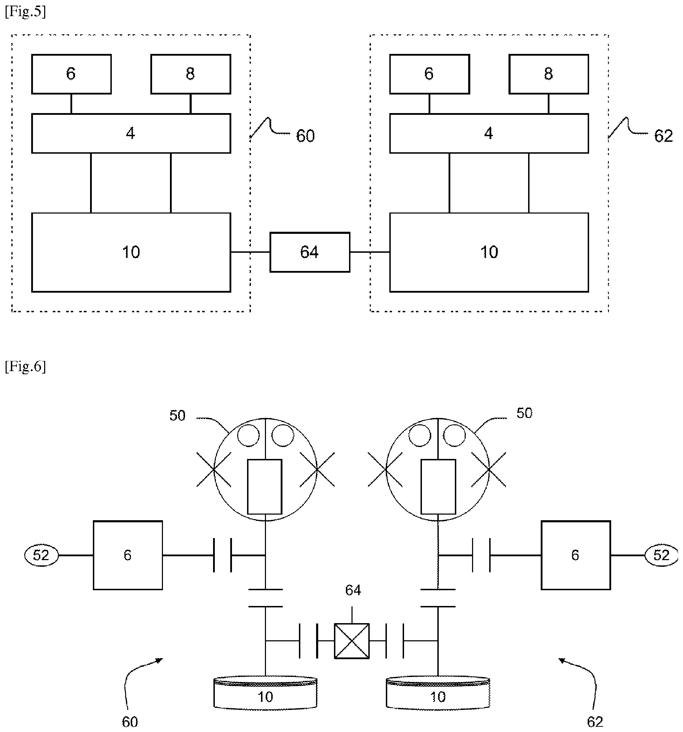

La figure 5 représente un schéma générique d'une porte CNOT entre un qubit de chat 60, dit « de contrôle », et un qubit de chat 62, dit « cible », associés tous les deux à un dispositif de confinement selon le mode de réalisation de la figure 1. Comme on peut le voir sur cette figure, la porte est mise en œuvre par la mise en série de deux qubits de chat munis d'un dispositif de confinement 2 selon le mode de réalisation de la figure 1, les oscillateurs des qubits de chat 60 et 62 étant reliés entre eux par un coupleur anharmonique 64 dont le rôle est de mettre en œuvre un Hamiltonien de type Zeno, dont l'allumage sera simultané à l'extinction du dispositif de confinement 2 du qubit de chat cible 62. Le dispositif de confinement du qubit de chat de contrôle reste lui néanmoins toujours effectif.

Un exemple d'Hamiltonien de type Zeno pour une porte CNOT sur des qubits de chat est un Hamiltonien de couplage à trois photons de la forme $\varepsilon_{CX}(\hat{a}_{co} + \hat{a}_{co}^\dagger - 2\alpha)(\hat{a}_{ci}^\dagger \hat{a}_{ci} - \alpha^2)$ où $\varepsilon_{CX}$ est l'amplitude de l'Hamiltonien de type Zeno, $\hat{a}_{co}$ et $\hat{a}_{co}^\dagger$ sont les opérateurs d'annihilation et de création de photons pour l'oscillateur harmonique de qubit de contrôle, $\hat{a}_{ci}$ et $\hat{a}_{ci}^{\dagger}$ sont les opérateurs d'annihilation et de création de photons pour l'oscillateur harmonique de qubit cible, et $\alpha$ est la taille de l'état de chat. Dans le cas où le coupleur non linéaire est une jonction Josephson, l'Hamiltonien de type Zeno peut être appliqué en pompant l'oscillateur harmonique de qubit cible à la fréquence de résonance de l'oscillateur harmonique de qubit contrôle, et en entraînant de façon résonante l'oscillateur harmonique de qubit contrôle. La génération de cet Hamiltonien de type Zeno est décrit dans l'article de S. Touzard, et.al. « Gated Conditional Displacement Readout of Superconducting Qubits », Phys. Rev. Letters 122, 080502, 2019. Pour effectuer une porte CNOT, l'amplitude $\varepsilon_{CX}(t)$ de l'Hamiltonien de type Zeno doit vérifier l'équation $4 \int_0^T \mathrm{Re}(\alpha\varepsilon_{CX}(t))dt = \pi$ où $\alpha$ est la taille du qubit de chat, Re() désigne la partie réelle, et T est la durée de la porte CNOT effectuée.

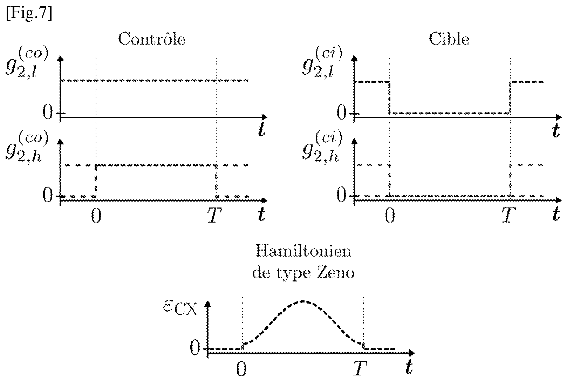

La séquence d'extinction et d'allumage des dispositifs de confinement et de l'Hamiltonien de type Zeno est représentée sur la figure 7. Comme on peut le voir sur cette figure :

- le confinement dissipatif du qubit de chat de contrôle doit toujours être allumé,
- le confinement conservatif du qubit de chat de contrôle doit au moins être allumé pendant que la porte CNOT est allumée,
- le confinement dissipatif du qubit de chat cible doit être éteint pendant que la porte CNOT est allumée, et être allumé le reste du temps, et
- le confinement conservatif du qubit de chat cible doit être éteint pendant que la porte CNOT est allumée, et peut être allumé ou éteint le reste du temps.

Comme on peut le voir sur la figure 6, le coupleur non linéaire 64 peut être une jonction Josephson couplée de manière capacitive aux oscillateurs des qubits de chat 60 et 62, comme décrit dans l'article de S. Touzard, et.al. « Gated Conditional Displacement Readout of Superconducting Qubits », Phys. Rev. Letters 122, 080502, 2019. En entraînant les oscillateurs des qubits de chat en résonance avec une amplitude adaptée dans le temps, la jonction Josephson 64 met en œuvre un Hamiltonien de type Zeno qui induit les résultats présentés en bas de la figure 7.

## Revendications

1. Système comprenant au moins un oscillateur de qubit de chat (10) et un dispositif de confinement relié audit oscillateur de qubit de chat (10),

ledit dispositif de confinement comprenant au moins un échangeur à deux photons (4 ; 40, 42), un oscillateur tampon à bas facteur de qualité (6) et un oscillateur tampon anharmonique à haut facteur de qualité (8),

l'oscillateur tampon à bas facteur de qualité (6) et l'oscillateur tampon anharmonique à haut facteur de qualité (8) étant reliés à l'au moins un échangeur à deux photons (4 ; 40, 42) et l'au moins un échangeur à deux photons (4) étant relié à l'au moins un oscillateur de qubit de chat (10), les deux oscillateurs tampon étant configurés pour être entraînés à leur fréquence de résonance respective ($\omega_l$, $\omega_h$),

afin de provoquer un échange de deux photons de l'au moins un oscillateur de qubit de chat avec un photon de l'oscillateur tampon à bas facteur de qualité (6) au travers de l'au moins un échangeur à deux photons et un échange de deux photons de l'au moins un oscillateur de qubit de chat avec un photon de l'oscillateur tampon anharmonique à haut facteur de qualité (8) au travers de l'au moins un échangeur à deux photons,

le dispositif de confinement et l'oscillateur de qubit de chat étant ainsi configurés pour mettre en œuvre un Hamiltonien de formule $g_{2h}((a^2-\alpha^2)bh^{\dagger}+(a^2-\alpha^2)^{\dagger}bh)+g_{2l}((a^2-\alpha^2)^{\dagger}bl+(a^2-\alpha^2)bl^{\dagger})$ où $g_{2h}$ et $g_{2l}$ sont des forces d'Hamiltonien, a est l'opérateur d'annihilation de photon de l'oscillateur de qubit de chat, $\alpha$ est l'amplitude de l'état de chat, bh est l'opérateur d'annihilation de photon de l'oscillateur tampon anharmonique à haut facteur de qualité (8), $b_l$ est l'opérateur d'annihilation de photon de l'oscillateur tampon à bas facteur de qualité (6), afin de générer un confinement dissipatif et un confinement conservatif du qubit de chat de l'oscillateur de qubit de chat.

2. Système selon la revendication 1, dans lequel l'au moins un échangeur à deux photons comprend deux échangeurs à deux photons (40, 42), l'un (40) étant disposé entre l'oscillateur tampon à bas facteur de qualité (6) et l'oscillateur de qubit de chat, et l'autre (42) étant disposé entre l'oscillateur tampon anharmonique à haut facteur de qualité (8) et l'oscillateur de qubit de chat.

3. Système selon la revendication 1, dans lequel l'au moins un échangeur à deux photons (4) et l'oscillateur tampon anharmonique à haut facteur de qualité (8) sont réalisés par un circuit ATS (50) avec des énergies Josephson de jonctions asymétriques, qui est configuré pour être entraîné de manière résonante à la fréquence $\omega_h$ et qui se voit appliquer deux pompes à flux de radiofréquence de fréquences respectives $2\omega_a-\omega_h$ et $2\omega_a-\omega_l$, $\omega_a$ étant la fréquence de résonance du mode de l'oscillateur de qubit de chat (10), $\omega_l$ est la fréquence de résonance de l'oscillateur tampon à bas facteur de qualité (6), et $\omega_h$ est la fréquence de résonance de l'oscillateur tampon anharmonique à haut facteur de qualité (8), le circuit ATS (50) étant couplé à l'oscillateur tampon à bas facteur de qualité (6), entraîné de manière résonante à la fréquence $\omega_l$, l'oscillateur tampon à bas facteur de qualité (6) étant couplé à un bain dissipatif (52).

**4.** Système selon la revendication 1, dans lequel l'au moins un échangeur à deux photons (4) et l'oscillateur tampon à bas facteur de qualité (6) sont réalisés par un circuit ATS (50) avec des énergies Josephson de jonctions symétriques, qui est configuré pour être entraîné de manière résonante à la fréquence $\omega_l$ et qui est configuré pour se voir appliquer deux pompes à flux de radiofréquence de fréquences respectives $2\omega_a-\omega_h$ et $2\omega_a-\omega_l$, $\omega_a$ étant la fréquence de résonance du mode de l'oscillateur de qubit de chat (10), $\omega_l$ est la fréquence de résonance de l'oscillateur tampon à bas facteur de qualité (6), et $\omega_h$ est la fréquence de résonance de l'oscillateur tampon anharmonique à haut facteur de qualité (8), le circuit ATS (50) étant couplé à un oscillateur tampon anharmonique à haut facteur de qualité (8), configuré pour être entraîné de manière résonante à la fréquence $\omega_h$, et à un bain dissipatif (52).

**5.** Système selon la revendication 4, dans lequel l'oscillateur tampon anharmonique à haut facteur de qualité (8) est un transmon.

**6.** Porte Z pour qubit de chat, comprenant un système selon l'une des revendications précédentes, dans laquelle ladite porte est configurée pour être exécutée en entraînant l'oscillateur de qubit de chat (10) pendant une durée choisie avec un Hamiltonien de type Zeno dont l'amplitude $\varepsilon_Z(t)$ vérifie l'équation

$$4 \int_0^T Re(\alpha\varepsilon_Z(t))dt = \vartheta$$

où $\alpha$ est la taille du qubit de chat, Re() désigne la partie réelle, et T est la durée de la porte, et $\vartheta$ est l'angle de rotation autour de l'axe Z.

**7.** Porte CNOT pour qubits de chat, comprenant un qubit de chat de contrôle (60) comprenant un système selon l'une des revendications 1 à 5 et un qubit de chat cible (62) comprenant un système selon l'une des revendications 1 à 5, et un coupleur non linéaire (64) reliant l'oscillateur de qubit de chat du qubit de chat de contrôle (60) et l'oscillateur de qubit de chat du qubit de chat de contrôle (62), dans laquelle la porte est configurée pour être exécutée en désactivant le dispositif de confinement du qubit de chat cible (62).

**8.** Porte CNOT selon la revendication 7, dans laquelle le circuit non linéaire (64) est une jonction Josephson qui met en œuvre un Hamiltonien de type Zeno de

forme $\varepsilon_{CX}\left(\hat{a}_{co} + \hat{a}_{co}^\dagger - 2\alpha\right)\left(\hat{a}_{ci}^\dagger\hat{a}_{ci} - \alpha^2\right)$

où $\varepsilon_{CX}$ est l'amplitude d'Hamiltonien, $\hat{a}_{co}$ et $\hat{a}_{co}^\dagger$ sont les opérateurs d'annihilation et de création de photons pour l'oscillateur harmonique de qubit de contrôle (60), $\hat{a}_{ci}$ et $\hat{a}_{ci}^\dagger$ sont les opérateurs d'annihilation et de création de photons pour l'oscillateur harmonique de qubit cible (62), et $\alpha$ est la taille de l'état de chat, l'amplitude $\varepsilon_{CX}(t)$ vérifiant l'équation

$$4\int_0^T Re(\alpha\varepsilon_{CX}(t))dt = \pi$$ où $\alpha$ est la taille du qubit de chat, Re() désigne la partie réelle, et T est la durée d'exécution de la porte.

**9.** Porte CNOT selon l'une des revendications 7 et 8, dans laquelle l'Hamiltonien $g_{2l}((a^2-\alpha^2)^\dagger bl+(a^2-\alpha^2)bl^\dagger)$ du dispositif de confinement du qubit de contrôle (60) est toujours mis en œuvre, l'Hamiltonien $g_{2h}((a^2-\alpha^2)bh^\dagger+(a^2-\alpha^2)^\dagger bh)$ du dispositif de confinement du qubit de chat de contrôle (60) est mis en œuvre au moins pendant l'exécution de la porte, l'Hamiltonien $g_{2l}((a^2-\alpha^2)^\dagger bl+(a^2-\alpha^2)bl^\dagger)$ du dispositif de confinement du qubit de chat cible (62) n'est pas mis en œuvre pendant l'exécution de la porte CNOT et est mis en œuvre le reste du temps, et l'Hamiltonien $g_{2h}((a^2-\alpha^2)bh^\dagger+(a^2-\alpha^2)^\dagger bh)$ du dispositif de confinement du qubit de chat cible (62) n'est pas mis en oeuvre pendant l'exécution de la porte.

**Patentansprüche**

**1.** System, umfassend mindestens einen Katzen-Qubit-Oszillator (10) und eine Einschlussvorrichtung, die mit dem Katzen-Qubit-Oszillator (10) verbunden ist,
wobei die Einschlussvorrichtung mindestens einen Zweiphotonentauscher (4; 40, 42), einen Pufferoszillator mit niedrigem Gütefaktor (6) und einen anharmonischen Pufferoszillator mit hohem Gütefaktor (8) umfasst, wobei der Pufferoszillator mit niedrigem Gütefaktor (6) und der anharmonische Pufferoszillator mit hohem Gütefaktor (8) mit dem mindestens einen Zweiphotonentauscher (4; 40, 42) verbunden sind und wobei der mindestens eine Zweiphotonentauscher (4) mit dem mindestens einen Katzen-Qubit-Oszillator (10) verbunden ist, wobei die beiden Pufferoszillatoren dazu ausgelegt sind, mit ihrer jeweiligen Resonanzfrequenz ($\omega_l$, $\omega_h$) getrieben zu werden, um einen Austausch von zwei Photonen des mindestens einen Katzen-Qubit-Oszillators mit einem Photon des Pufferoszillators mit niedrigem Gütefaktor (6) über den mindestens einen Zweiphotonentauscher und einen Austausch von zwei Photonen des mindestens einen Katzen-Qubit-Oszillators mit einem Photon des anharmonischen Pufferoszillators mit hohem Gütefaktor (8) über den mindestens einen Zweiphotonentauscher zu verursachen; wobei die Einschlussvorrichtung und der Katzen-Qubit-Oszillator somit dazu ausgelegt sind, einen Hamiltonian mit der Formel $g_{2h}((a^2-\alpha^2)bh^\dagger+(a^2-\alpha^2)^\dagger bh)+g_{2l}((a^2-\alpha^2)^\dagger bl+(a^2-\alpha^2)bl^\dagger)$ zu implementieren, worin $g_{2h}$ und $g_{2l}$ Hamiltonian-Kräfte sind, a der Photonenannihilationsoperator des Katzen-Qubit-Oszillators ist, $\alpha$ ist die Amplitude des Katzenzustands ist, bh der Photonenannihilationsoperator des anharmonischen Pufferoszillators mit hohem Gütefaktor (8) ist, $b_l$ der Photonenannihilationsoperator des Pufferoszillators mit niedrigem Gütefaktor (6) ist, um einen dissipativen Einschluss und einen konservativen Einschluss des Katzen-Qubits des Katzen-Qubit-Oszillators zu erzeugen.

2. System nach Anspruch 1, wobei der mindestens eine Zweiphotonentauscher zwei Zweiphotonentauscher (40, 42) umfasst, wobei der eine (40) zwischen dem Pufferoszillator mit niedrigem Gütefaktor (6) und dem Katzen-Qubit-Oszillator angeordnet ist und wobei der andere (42) zwischen dem anharmonischen Pufferoszillator mit hohem Gütefaktor (8) und dem Katzen-Qubit-Oszillator angeordnet ist.

3. System nach Anspruch 1, wobei der mindestens eine Zweiphotonentauscher (4) und der anharmonische Pufferoszillator mit hohem Gütefaktor (8) durch eine ATS-Schaltung (50) mit Josephson-Energien mit asymmetrischen Übergängen ausgeführt sind, die dazu ausgelegt ist, mit der Frequenz $\omega_h$ resonant getrieben zu werden, und auf die zwei Hochfrequenzflusspumpen mit jeweiligen Frequenzen $2\omega_a-\omega_h$ und $2\omega_a-\omega_l$ angewendet werden, wobei $\omega_a$ die Resonanzfrequenz des Modus des Katzen-Qubit-Oszillators (10) ist, $\omega_l$ die Resonanzfrequenz des Pufferoszillators mit niedrigem Gütefaktor (6) ist und $\omega_h$ die Resonanzfrequenz des anharmonischen Pufferoszillators mit hohem Gütefaktor (8) ist, wobei die ATS-Schaltung (50) mit dem Pufferoszillator mit niedrigem Gütefaktor (6) gekoppelt ist und resonant mit der Frequenz $\omega_l$ getrieben wird, wobei der Pufferoszillator mit niedrigem Gütefaktor (6) mit einem dissipativen Bad (52) gekoppelt ist.

4. System nach Anspruch 1, wobei der mindestens eine Zweiphotonentauscher (4) und der Pufferoszillator mit niedrigem Gütefaktor (6) durch eine ATS-Schaltung (50) mit Josephson-Energien mit symmetrischen Übergängen ausgeführt sind, die dazu ausgelegt ist, mit der Frequenz $\omega_l$ resonant getrieben zu werden, und auf die zwei Hochfrequenzflusspumpen mit jeweiligen Frequenzen $2\omega_a-\omega_h$ und $2\omega_a-\omega_l$ angewendet werden, wobei $\omega_a$ die Resonanzfrequenz des Modus des Katzen-Qubit-Oszillators (10) ist, $\omega_l$ die Resonanzfrequenz des Pufferoszillators mit niedrigem Gütefaktor (6) ist und $\omega_h$ die Resonanzfrequenz des anharmonischen Pufferoszillators mit hohem Gütefaktor (8) ist, wobei die ATS-Schaltung (50) mit einem anharmonischen Pufferoszillator mit hohem Gütefaktor (8), der dazu ausgelegt ist, resonant mit der Frequenz $\omega_h$ getrieben zu werden, und mit einem dissipativen Bad (52) gekoppelt ist.

5. System nach Anspruch 4, wobei der anharmonische Pufferoszillator mit hohem Gütefaktor (8) ein Transmon ist.

6. Z-Gatter für Katzen-Qubit, umfassend ein System nach einem der vorhergehenden Ansprüche, wobei das Gatter dazu ausgelegt ist, ausgeführt zu werden, indem der Katzen-Qubit-Oszillator (10) während einer gewählten Dauer mit einem Hamiltonian vom Typ Zeno getrieben wird, dessen Amplitude $\varepsilon_z(t)$ die Gleichung $4\int_0^T \mathrm{Re}\left(\alpha\varepsilon_Z(t)\right)dt = \vartheta$ erfüllt, worin $\alpha$ die Größe des Katzen-Qubits ist, Re() den realen Teil bezeichnet und T die Dauer des Gatters ist und $\vartheta$ der Rotationswinkel um die Achse Z ist.

7. CNOT-Gatter für Katzen-Qubits, umfassend ein Kontroll-Katzen-Qubit (60), das ein System nach einem der Ansprüche 1 bis 5 umfasst, und ein Ziel-Katzen-Qubit (62), das ein System nach einem der Ansprüche 1 bis 5 umfasst, und einen nichtlinearen Koppler (64), der den Katzen-Qubit-Oszillator (60) des Kontroll-Katzen-Qubits und den Katzen-Qubit-Oszillator des Kontroll-Katzen-Qubits (62) verbindet, wobei das Gatter dazu ausgelegt ist, ausgeführt zu werden, indem die Einschlussvorrichtung des Ziel-Katzen-Qubits (62) deaktiviert wird.

8. CNOT-Gatter nach Anspruch 7, wobei dem die nichtlineare Schaltung (64) ein Josephson-Übergang ist, der einen Hamiltonian vom Typ Zeno mit der Form $\varepsilon_{cx}(\hat{a}_{co} + \hat{a}_{co}^\dagger - 2\alpha)(\hat{a}_{ci}^\dagger\hat{a}_{ci} - \alpha^2)$ implementiert, worin $\varepsilon_{cx}$ die Hamiltonian-Amplitude ist, $\hat{a}_{co}$ und $\hat{a}_{co}^\dagger$ die Photonenannihilations- und Photonenerzeugungsoperatoren für den harmonischen Kontroll-Qubit-Oszillator (60) sind, $\hat{a}_{ci}$ und $\hat{a}_{ci}^\dagger$ die Photonenannihilations- und Photonenerzeugungsoperatoren für den harmonischen Ziel-Qubit-Oszillator (62) sind und $\alpha$ die Größe des Katzenzustands ist, wobei die Amplitude $\varepsilon_{cx}(t)$ die Gleichung $4\int_0^T \mathrm{Re}\left(\alpha\varepsilon_{CX}(t)\right)dt = \pi$ erfüllt, worin $\alpha$ die Größe des Katzen-Qubits ist, Re() den realen Teil bezeichnet und T die Ausführungsdauer des Gatters ist.

9. CNOT-Gatter nach einem der Ansprüche 7 und 8, wobei der Hamiltonian $g_{2l}(((a^2-\alpha^2)^\dagger bl+(a^2-\alpha^2)bl^\dagger)$ der Einschlussvorrichtung des Kontroll-Qubits (60) immer implementiert wird, wobei der Hamiltonian $g_{2h}$ $((a^2-\alpha^2)bh^\dagger + (a^2-\alpha^2)^\dagger bh)$ der Einschlussvorrichtung des Kontroll-Katzen-Qubits (60) mindestens während der Ausführung des Gatters implementiert wird, wobei der Hamiltonian $g_{2l}((a^2-\alpha^2)^\dagger bl+(a^2-\alpha^2)bl)^\dagger$ der Einschlussvorrichtung des Ziel-Katzen-Qubits (62) während der Ausführung des CNOT-Gatters nicht implementiert wird und den Rest der Zeit implementiert wird, und wobei der Hamiltonian $g_{2h}((a^2-\alpha^2)bh^\dagger(a^2-\alpha^2)^\dagger bh)$ der Einschlussvorrichtung des Ziel-Katzen-Qubits (62) während der Ausführung des Gatters nicht implementiert wird.

## Claims

1. System comprising at least one cat qubit oscillator (10) and a confinement device connected to said cat qubit oscillator (10), said confinement device comprising at least one two-photon exchanger (4; 40, 42), a low quality factor buffer oscillator (6) and a high quality factor anharmonic buffer oscillator (8), the low quality factor buffer oscillator (6) and the high quality factor anharmonic buffer oscillator (8) being connected to the at least one two-photon exchanger (4; 40, 42) and the at least one two-photon exchanger (4) being connected to the at least one cat qubit oscillator (10), the two buffer oscillators being configured to be driven at their respective resonance frequency ($\omega_l$, $\omega_h$), in order to cause an exchange of two photons from the at least one cat qubit oscillator with one photon from the low quality factor buffer oscillator (6) through the at least one two-photon exchanger and an exchange of two photons from the at least one cat qubit oscillator with one photon from the high quality factor anharmonic buffer oscillator (8) through the at least one two-photon exchanger, the confinement device and the cat qubit oscillator being thereby configured to implement a Hamiltonian of formula $g_{2h}((a^2-\alpha^2)bh^\dagger+(a^2-\alpha^2)^\dagger bh)+g_{2l}((a^2-\alpha^2)^\dagger bl+(a^2-\alpha^2)bl^\dagger)$ where $g_{2h}$ and $g_{2l}$ are Hamiltonian forces, a is the photon annihilation operator of the cat qubit oscillator, $\alpha$ is the amplitude of the cat state, bh is the photon annihilation operator of the high quality factor anharmonic buffer oscillator (8), $b_l$ is the photon annihilation operator of the low quality factor buffer oscillator (6), to generate a dissipative confinement and a conservative confinement of the cat qubit of the cat qubit oscillator.

2. System according to claim 1, wherein said at least one two-photon exchanger comprises two two-photon exchangers (40, 42), one (40) being disposed between the low quality factor buffer oscillator (6) and the cat qubit oscillator, and the other (42) being disposed between the high quality factor anharmonic buffer oscillator (8) and the cat qubit oscillator.

3. System according to claim 1, wherein the at least one two-photon exchanger (4) and the high quality factor anharmonic buffer oscillator (8) are produced by an ATS circuit (50) with asymmetric junction Josephson energies, which is configured to be driven resonantly at the frequency $\omega_h$ and to which are applied two radiofrequency flux pumps with respective frequencies $2\omega_a-\omega_h$ and $2\omega_a-\omega_l$, $\omega_a$ being the resonance frequency of the cat qubit oscillator mode (10), $\omega_l$ is the resonance frequency of the low quality factor buffer oscillator (6), and $\omega_h$ is the resonance frequency of the high quality factor anharmonic buffer oscillator (8), the ATS circuit (50) being coupled to the low quality factor buffer oscillator (6), driven resonantly at the frequency $\omega_l$, the low quality factor buffer oscillator (6) being coupled to a dissipative bath (52).

4. System according to claim 1, wherein the at least one two-photon exchanger (4) and the low quality factor buffer oscillator (6) are produced by an ATS circuit (50) with symmetrical junction Josephson energies, which is configured to be driven resonantly at the frequency $\omega_l$ and which is configured to have two radiofrequency flux pumps with respective frequencies $2\omega_a-\omega_h$ and $2\omega_a-\omega_l$ applied to it, $\omega_a$ being the resonance frequency of the cat qubit oscillator mode (10), $\omega_l$ is the resonance frequency of the low quality factor buffer oscillator (6), and $\omega_h$ is the resonance frequency of the high quality factor anharmonic buffer oscillator (8), the ATS circuit (50) being coupled to a high quality factor anharmonic buffer oscillator (8), configured to be driven resonantly at the frequency $\omega_h$, and to a dissipative bath (52).

5. System according to claim 4, wherein the high quality factor anharmonic buffer oscillator (8) is a transmon.

6. A Z gate for a cat qubit, comprising a system according to one of the preceding claims, wherein said gate is configured to be executed by driving the cat qubit oscillator (10) for a chosen duration with a Zeno-type Hamiltonian whose amplitude $\varepsilon_Z(t)$ satisfies the equation $4\int_0^T Re(\alpha\varepsilon_Z(t))dt = \vartheta$ where $\alpha$ is the size of the cat qubit, Re() designates the real part, and T is the duration of the gate, and $\vartheta$ is the angle of rotation around the axis Z.

7. A CNOT gate for cat qubits, comprising a control cat qubit (60) comprising a system according to one of claims 1 to 5 and a target cat qubit (62) comprising a system according to one of claims 1 to 5, and a nonlinear coupler (64) connecting the cat qubit oscillator of the control cat qubit (60) and the cat qubit oscillator of the control cat qubit (62), wherein the gate is configured to be executed by deactivating the target cat qubit confinement device (62).

8. The CNOT gate according to claim 7, wherein the nonlinear circuit (64) is a Josephson junction which implements a Zeno-type Hamiltonian of form

$$\varepsilon_{CX}\left(\hat{a}_{co} + \hat{a}_{co}^{\dagger} - 2\alpha\right)\left(\hat{a}_{ci}^{\dagger}\hat{a}_{ci} - \alpha^2\right) \quad \text{where}$$

$\varepsilon_{CX}$ is the Hamiltonian amplitude, $\hat{a}_{co}$ and $\hat{a}_{co}^{\dagger}$ are the photon annihilation and creation operators for the control qubit harmonic oscillator (60), $\hat{a}_{ci}$ and $\hat{a}_{ci}^{\dagger}$ are the photon annihilation and creation operators for the target qubit harmonic oscillator (62), and $\alpha$ is the size of the cat state, the amplitude $\varepsilon_{CX}(t)$ satisfying the equation

$$4\int_0^T \mathrm{Re}(\alpha\varepsilon_{CX}(t))dt = \pi \quad \text{where } \alpha \text{ is the}$$

size of the cat qubit, Re() denotes the real part, and T is the gate execution time.

9. The CNOT gate according to one of claims 7 and 8, wherein the Hamiltonian $g_{2l}$ $((a^2-\alpha^2)^{\dagger}bl+(a^2-\alpha^2)bl^{\dagger})$ of the control qubit confinement device (60) is always implemented, the Hamiltonian $g_{2h}((a^2-\alpha^2)bh^{\dagger}+(a^2-\alpha^2)^{\dagger}bh)$ of the control cat qubit confinement device (60) is implemented at least during the execution of the gate, the Hamiltonian $g_{2l}((a^2-\alpha^2)^{\dagger}bl+(a^2-\alpha^2)bl^{\dagger})$ of the target cat qubit confinement device (62) is not implemented during the execution of the CNOT gate and is implemented for the rest of the time, and the Hamiltonian $g_{2h}$ $((a^2-\alpha^2)bh^{\dagger}+(a^2-\alpha^2)^{\dagger}bh)$ of the target cat qubit confinement device (62) is not implemented during the execution of the gate.

[Fig.1]

[Fig.2]

[Fig.3]

[Fig.4]

[Fig.5]

[Fig.6]

[Fig.7]

Contrôle
$g_{2,l}^{(co)}$
0
$g_{2,h}^{(co)}$
0
0     T   $t$

Cible
$g_{2,l}^{(ci)}$
0
$g_{2,h}^{(ci)}$
0
0     T   $t$

Hamiltonien
de type Zeno

$\varepsilon_{CX}$
0
0     T   $t$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LESCANNE et al.** Exponential suppression of bit-flips in a qubit encoded in an oscillator. *Nature Physics*, 2020, vol. 16, 509
- **PURI et al.** Engineering the quantum states of light in a Kerr-nonlinear resonator by two-photon driving. *npj Quantum Inf*, 2017, vol. 3, 18
- **DARMAWAN et al.** Practical quantum error correction with the XZZX code and Kerr-cat qubits. *PRX Quantum*, 2021, vol. 2, 030345
- **GRIMM et al.** Stabilization and operation of a Kerr-cat qubit. *Nature*, 2020, vol. 584, 205
- **S. PURI**. Bias-preserving gates with stabilized cat qubits. *Science Advances*, 2020, vol. 6 (34), 10.1126
- **PUTTERMAN et al.** Colored Kerr cat qubits. *arXiv :2107.09198*
- **MIRRAHIMI et al.** Dynamically protected cat-qubits : a new paradigm for universal quantum computation. *New J. Phys.*, 2014, 16045014
- **ROY et al.** Continuous Generation and Stabilization of Mesoscopic Field Superposition States in a Quantum Circuit. *Phys. Rev. A*, 2015, vol. 91, 013810
- **J. GUILLAUD**. Repetition Cat Qubits for Fault-Tolerant Quantum Computation. *Physical Review X*, 2019, vol. 9, 041053
- **S. TOUZARD**. Gated Conditional Displacement Readout of Superconducting Qubits. *Phys. Rev. Letters*, 2019, vol. 122, 080502